# EUROPEAN PATENT APPLICATION

(11) **EP 4 844 095 A1**
(43) Date of publication of application: **25.11.2026**
(21) Application number: 25908456.4
(22) Date of filing: 21.02.2025
(51) Int. Cl.: C22C 38/00, C22C 38/14, C22C 38/60

(54) **HOT-ROLLED STEEL SHEET**

(30) Priority: 17.12.2024 JP 2024221029
(71) Applicant: Tokyo Steel Manufacturing Co., Ltd., Tokyo, 100-0013 (JP)
(72) Inventor: HAYASHI, Kazuyuki, Tokyo 100-0013 (JP); SAKAEDA, Hiroyuki, Tokyo 100-0013 (JP); ODANI, Wataru, Tokyo 100-0013 (JP); NISHINA, Hirotaka, Tokyo 100-0013 (JP); NAKANISHI, Noriyuki, Tokyo 100-0013 (JP); TAKEUCHI, Naoya, Tokyo 100-0013 (JP); KOKUMAI, Hiroyuki, Tokyo 100-0013 (JP)
(74) Representative: Fleuchaus & Gallo Partnerschaft mbB
(86) International application number: PCT/JP2025/006076
(87) International publication number: WO 2026/133577

(57) **Abstract**

A hot rolled steel sheet includes
more than or equal to 0.005% by mass and less than or equal to 0.20% by mass of carbon (C),
more than or equal to 0.004% by mass and less than or equal to 0.55% by mass of silicon (Si),
more than or equal to 0.07% by mass and less than or equal to 1.65% by mass of manganese (Mn),
less than or equal to 0.005% by mass of titanium (Ti),
less than or equal to 0.0005% by mass of boron (B), and
a remainder including iron (Fe), aluminum (Al), nitrogen (N), and unavoidable impurities. Furthermore, in the steel sheet,
more than or equal to 0.0065% by mass and less than or equal to 0.0120% by mass of the nitrogen (N) is contained,
more than 0.070% by mass and less than or equal to 0.110% by mass of the aluminum (Al) is contained, and
less than or equal to 0.0020% by mass of solid-solved nitrogen that is not combined with other components is contained.

This makes it possible to provide a hot rolled steel sheet that is inexpensive and has excellent aging resistance.

## Description

### TECHNICAL FIELD

The present invention relates to a hot rolled steel sheet, and more particularly, to a hot rolled steel sheet produced in an electric furnace using iron scrap as a main raw material.

### BACKGROUND ART

There are two methods for producing a hot rolled steel sheet: one method involves producing the steel sheet in a blast furnace using iron ore, which is a natural resource, as a main raw material; and the other method involves producing the steel sheet in an electric furnace using iron scrap, which is a recycle resource, as a main raw material.

When producing a hot rolled steel sheet in a blast furnace, in addition to the energy required to melt the iron ore, a large amount of coke is needed to remove the oxygen contained in the iron ore, resulting in high carbon dioxide emissions.

On the other hand, when producing a hot rolled steel sheet in an electric furnace, iron scrap is melted to produce the steel sheet, eliminating the need for large amounts of coke and significantly reducing carbon dioxide emissions compared to producing the steel sheet in a blast furnace.

However, electric furnace steel produced in the above-mentioned electric furnace generally has a higher nitrogen (N) content than blast furnace steel. The nitrogen solid-solved in the steel accumulates in the iron crystal lattice, hindering dislocation movement. As a result, a hot rolled steel sheet undergoes age hardening after production, and the workability of the steel sheet tends to decrease.

Age hardening is a phenomenon in which interstitial solid-solved atoms such as carbon and nitrogen accumulate around dislocations introduced by plastic deformation such as temper rolling, pinning the mobile dislocations and causing yield point elongation. This phenomenon becomes more pronounced as the solid-solved carbon content and the solid-solved nitrogen content in the steel increases.

Patent documents 1 and 2 disclose the following: by adding titanium (Ti) or boron (B) to electric furnace steel, the nitrogen in the steel is precipitated as nitride, thereby reducing the amount of solid-solved nitrogen; and keeping the Cu and Sn content, which are elements derived from iron scrap, within a predetermined range improves the aging resistance of a hot rolled steel sheet.

### RELATED ART DOCUMENTS

### Patent Documents

Patent Document 1 : Japanese Patent Application Laid-open Publication No. 07-157845
Patent Document 2 : Japanese Patent Application Laid-open Publication No. 07-197195

### SUMMARY OF THE INVENTION

### Problems to be resolved by the invention

However, titanium (Ti) is expensive and increases the susceptibility of slabs to surface defects, and the addition of boron (B) leads to unwanted effects such as weld cracking, plating cracking, and deterioration of ductility and hole-expanding properties.

The present invention has been made in view of the problems of the above related art, and its objective is to provide a hot rolled steel sheet that is inexpensive and has excellent aging resistance.

### Solutions to the Problems

The inventors of the present invention, after diligent research to achieve the above objective, discovered that the objective can be achieved by fixing nitrogen in steel as aluminum nitride and reducing the amount of solid-solved nitrogen that has not combined with other components, and thus completed the present invention.

In the other words, a hot rolled steel sheet of the present invention meeting the following conditions (1) to (3) solves the above problems.
(1) A hot rolled steel sheet comprising
   more than or equal to 0.005% by mass and less than or equal to 0.20% by mass of carbon (C),
   more than or equal to 0.004% by mass and less than or equal to 0.55% by mass of silicon (Si),
   more than or equal to 0.07% by mass and less than or equal to 1.65% by mass of manganese (Mn),
   less than or equal to 0.005% by mass of titanium (Ti),
   less than or equal to 0.0005% by mass of boron (B), and
   a remainder including iron (Fe), aluminum (Al), nitrogen (N), and unavoidable impurities, wherein
   more than or equal to 0.0065% by mass and less than or equal to 0.0120% by mass of the nitrogen (N) is contained,
   more than 0.070% by mass and less than or equal to 0.110% by mass of the aluminum (Al) is contained, and
   less than or equal to 0.0020% by mass of solid-solved nitrogen that is not combined with other components is contained.
(2) The hot rolled steel sheet according to the above item of (1),
   wherein
   the steel sheet contains more than or equal to (0.000562 / (an amount of the nitrogen (N))) (% by mass) of the aluminum.
(3) The hot rolled steel sheet according to the above item of (1),
   wherein
   more than or equal to 80% by mass of the nitrogen (N) is in a form of aluminum nitride (AlN).

### Advantageous Effects of the Invention

According to a hot rolled steel sheet of the present invention, nitrogen in the steel sheet is fixed as aluminum nitride, and the amount of solid-solved nitrogen that is not combined with other components is reduced, thereby providing a hot rolled steel sheet that is inexpensive and has excellent aging resistance.

### BRIEF DESCRIPTION OF DRAWINGS

FIG. 1 is a graph illustrating the changes over time in the aging tests of Example 1 and Comparative Example 6.
FIG. 2 is a graph illustrating the changes over time in the aging tests of Example 4 and Comparative Example 7.
FIG. 3 is a graph illustrating the particle analysis results for Example 1 and Comparative Example 1.

### DESCRIPTION OF THE EMBODIMENTS

A hot rolled steel sheet of the present invention will be described in detail.

A hot rolled steel sheet of the present invention comprises:
more than or equal to 0.005% by mass and less than or equal to 0.20% by mass of carbon (C),
more than or equal to 0.004% by mass and less than or equal to 0.55% by mass of silicon (Si),
more than or equal to 0.07% by mass and less than or equal to 1.65% by mass of manganese (Mn),
less than or equal to 0.005% by mass of titanium (Ti),
less than or equal to 0.0005% by mass of boron (B), and
a remainder including iron (Fe), aluminum (Al), nitrogen (N), and unavoidable impurities.

Furthermore, in the above steel sheet, more than or equal to 0.0065% by mass and less than or equal to 0.0120% by mass of the above nitrogen (N) is contained,
more than 0.070% by mass and less than or equal to 0.110% by mass of the above aluminum (Al) is contained, and
less than or equal to 0.0020% by mass of solid-solved nitrogen that is not combined with other components is contained.

The nitrogen contained in cast billet (steel slab) combines with the aluminum in the billet as the billet cools, and is fixed as aluminum nitride.

However, in a hot rolling process that follows the above process, the hot rolled steel sheet is produced by heating the steel slab (the billet) to approximately 1150°C and rolling it. Therefore, in the hot rolling process described above, the temperature of the slab is maintained above the dissolution temperature of aluminum nitride for an extended period of time. This causes the aluminum nitride to decompose, and nitrogen from aluminum nitride that is not combined with other components solid-solves in the hot rolled steel sheet, thereby reducing the aging resistance of the hot rolled steel sheet.

The inventors focused on the fact that the dissolution temperature of aluminum nitride varies depending on the nitrogen and aluminum concentrations contained in the billet (steel slab).

That is, by adjusting the aluminum content according to the amount of nitrogen contained, the dissolution temperature of aluminum nitride can be increased, restraining the decomposition of aluminum nitride during the hot rolling process, reducing the amount of nitrogen that is solid-solved in the hot rolled steel sheet and is not combined with other components, and improving the aging resistance of the hot rolled steel sheet.

The dissolution temperature of the above aluminum nitride in a face-centered cubic lattice structure can be determined by the following formula (1). $Log \left(A1\times N\right) = - 7400 / T + 1.95$ formula (1)

In formula (1), Al represents the mass percentage of aluminum, N represents the mass percentage of nitrogen, and T represents the absolute temperature.

The ratio of aluminum to total nitrogen in a hot rolled steel sheet depends on the temperature of the billet during the hot rolling process. When the aluminum content relative to total nitrogen in the hot rolled steel sheet is 0.000562 / N (% by mass) or higher, as derived from the above formula (1), the dissolution temperature of aluminum nitride can be maintained at 1150°C or higher. This restrains the dissolution of nitrogen, which was fixed as aluminum nitride during a billet (steel slab) production, in the heating furnace during the hot rolling process, or improves the fixation of nitrogen.

Furthermore, it is preferable that more than or equal to 80% by mass of the nitrogen (N) in the hot rolled steel sheet is in the form of aluminum nitride (AlN).

The aluminum nitride precipitated in the billet (steel slab) is not decomposed during the hot rolling process, or the precipitation of the aluminum nitride is accelerated, resulting in more than or equal to 80% by mass of nitrogen remaining as aluminum nitride in the hot rolled steel sheet. This reduces the amount of solid-solved nitrogen that is not combined with other components in the hot rolled steel sheet, thereby improving the aging resistance of the hot rolled steel sheet.

Next, the component composition of the hot rolled steel sheet of the present invention will be described. Unless otherwise specified, "%" refers to "% by mass" indicating the concentration of the target additive element in the steel sheet.

### Regarding "more than or equal to 0.005% by mass and less than or equal to 0.20% by mass of carbon (C)"

Carbon is a fundamental element that increases the strength of steel. When the carbon content exceeds 0.20%, the ductility, deep drawability, and elongation flangeability of a hot rolled steel sheet decrease.

Furthermore, the target carbon content for the hot rolled steel sheet with low carbon produced by the normal refining is more than or equal to 0.005%. When the carbon content thereof is less than 0.005%, the refining costs and production yield for the hot rolled steel sheet deteriorate.

### Regarding "more than or equal to 0.004% by mass and less than or equal to 0.55% by mass of silicon (Si)"

Silicon is an inexpensive element with high solid solution strengthening performance and contributes to increasing the strength of steel. Therefore, the silicon content is more than or equal to 0.004% by mass.

Furthermore, when the silicon content exceeds 0.55% by mass, a strong and unevenly thick scale forms on the steel sheet during the hot rolling process. Even after pickling, scale residue and indentations remain on the surface of the steel sheet, resulting in a decrease in the surface quality of the final product, the hot rolled steel sheet.

### Regarding "more than or equal to 0.07% by mass and less than or equal to 1.65% by mass of manganese (Mn)"

Manganese is not only an element that strengthens a hot rolled steel sheet, but it also has the effect of fixing sulfur (S), that is an impurity element that causes high temperature embrittlement of steel, as MnS. Therefore, the manganese content is 0.07% by mass or more.

However, adding the manganese in excess of 1.65% by mass will impair formability and plating properties of the steel sheet.

### Regarding "less than or equal to 0.005% by mass of titanium (Ti)"

Titanium combines with nitrogen to precipitate as TiN, reducing the amount of solid-solved nitrogen in the steel and improving the aging resistance of the steel sheet. In the hot rolled steel sheet of the present invention, since the solid-solved nitrogen in the steel is precipitated as aluminum nitride, there is no need to add titanium. Furthermore, excessive titanium addition to the steel leads to a decrease in the formability of the steel sheet due to the hardening of the structure and the formation of coarse carbonitrides in the steel. Therefore, the titanium content is limited to 0.005% by mass or less, which is the level that may be contained in iron scrap.

### Regarding "less than or equal to 0.0005% by mass of boron (B)"

Boron, like titanium mentioned above, combines with nitrogen to precipitates as BN, reducing the amount of solid-solved nitrogen in the steel and improving the aging resistance of the steel sheet. In the hot rolled steel sheet of the present invention, since the solid-solved nitrogen in the steel is precipitated as aluminum nitride, there is no need to add boron. Furthermore, boron increases the hot deformation resistance of the steel, hindering productivity of the steel sheet, and leads to an increase in scale defects of the steel sheet as the finishing temperature thereof rises; therefore, the boron content is less than or equal to 0.0005% by mass.

A remainder, other than the elements mentioned above, comprises iron (Fe), nitrogen (N) aluminum (Al), and unavoidable impurities.

### Regarding "more than or equal to 0.0065% by mass and less than or equal to 0.0120% by mass of the nitrogen (N) is contained"

Nitrogen is an unavoidable impurity in steel. In particular, when steel is melted in an electric furnace, atomic active nitrogen generated during arc discharge enters the molten steel, resulting in steel with a higher nitrogen content compared to when steel is melted using a blast furnace-converter method.

To improve the strain aging resistance and workability of the hot rolled steel sheet, a low nitrogen content is desirable. When the hot rolled steel sheet contains a large amount of nitrogen, the steel sheet reduced its formability, and undergoes stretcher strain due to age hardening.

According to a hot rolled steel sheet of the present invention, nitrogen solid-solved in the steel is precipitated as aluminum nitride, and the nitrogen is fixed, so there is no need to reduce the nitrogen content by degassing. Therefore, the nitrogen content is 0.0065% by mass or more and 0.0120% by mass or less.

Since the nitrogen fixation described above eliminates the increase in tensile strength caused by solid-solved nitrogen, the carbon equivalent should be adjusted as needed to compensate for tensile strength.

### Regarding "more than 0.070% by mass and less than or equal to 0.110% by mass of the aluminum (Al) is contained".

Because aluminum causes solid-solved nitrogen in steel to precipitate as aluminum nitride and is also effective in deoxidizing steel, aluminum is an element that is actively added.

However, similar to Si, the excessive amount of Al leads to an increase in scale defects, a decrease in plating properties, and even decrease in weldability, in the steel sheet. Therefore, the amount of aluminum is more than 0.070% by mass and less than or equal to 0.110% by mass.

Unavoidable impurities include phosphorus (P), sulfur (S), as well as elements derived from iron scrap, such as copper (Cu), tin (Sn), nickel (Ni), chromium (Cr), molybdenum (Mo), vanadium (V), and niobium (Nb), which are included in iron scrap material. The total amount of these inevitable impurities is 3% by mass or less.

Similar to manganese (Mn), phosphorus causes uneven concentration during solidification, impairing the surface quality after pressing. Furthermore, the addition of large amounts of phosphorus has significant disadvantages, such as reducing resistance to secondary processing embrittlement and degrading the plating properties of a steel sheet. To avoid these problems, the phosphorus content is preferably 0.050% or less.

Sulfur is inevitably present in steel and segregates at grain boundaries, leading to cracking of slabs and hot rolled sheets due to red-hot embrittlement, as well as a decrease in resistance to secondary processing embrittlement. For this reason, it is preferable that the sulfur content is 0.050% or less.

Copper can be included in amounts of 0.01% or more because copper improves the corrosion resistance and strength of steel sheets. However, the excessive addition of copper can lead to cracking of slabs and hot rolled steel sheets due to a decrease in hot ductility, so it is preferable that the amount of copper is 1% or less.

Tin has the effect of restraining surface oxidation of a steel sheet. And tin reduces scale defects, surface nitriding, and decarburization, in the steel sheet, so tin is effective in maintaining surface quality of the steel sheet. However, since excessive amount of tin reduces the formability of the steel sheet, it is preferable that the tin content is 0.05% or less.

Nickel improves the corrosion resistance and low-temperature toughness of a steel sheet. However, when the amount of nickel is excessive, the strength of the steel sheet increases and workability of the steel sheet decreases, so it is preferable that the nickel content is 0.20% or less.

Chromium improves the corrosion resistance of a steel sheet and increases the strength of the steel sheet through the formation of carbides. However, when the amount of chromium is excessive, the strength of the steel sheet increases and the workability of the steel sheet decreases, so it is preferable that the chromium content is 0.30% or less.

Excessive molybdenum content increases the strength of a steel sheet and decreases the workability of the steel sheet. Therefore, it is preferable that the molybdenum content is 0.05% or less.

Vanadium improves the workability and weld toughness of a steel sheet, but excessive addition of vanadium can degrade the toughness of the steel sheet, so it is preferable that the vanadium content is 0.005% or less.

Niobium is effective in improving the oxidation resistance of a hot rolled steel sheet at high temperatures, but excessive niobium content may reduce the toughness of the steel sheet. Therefore, it is preferable that the niobium content is 0.005% or less.

### [EXAMPLES]

The present invention will be described in detail below with reference to examples, but the present invention is not limited to the following examples.

Steel materials were melted in an electric furnace to prepare slabs having the chemical composition shown in Table 1.

Steel materials were melted in an electric furnace with degassing to prepare slabs for Comparative Examples 1 to 3, and without degassing to prepare slabs for Comparative Examples 4 to 10 and Examples 1 to 10.

Next, the slabs were heated in a heating furnace while maintaining that the ambient temperature did not exceed a maximum of 1230°C, and the slabs were extracted at a slab's temperature of approximately 1150°C and then hot rolled. Under these conditions, the hot rolled steel sheets with thicknesses of 1.5 mm, 2.0 mm, 2.1 mm, 2.3 mm, 4.15 mm, and 16 mm were produced.

**[Table 1]**

| | mass% | mass% | mass% | mass% | mass% | mass% | mass% | mass% | mass% | mass% | mass% | mass% | mass% | mass% | mass% | mass% | mass% |
|---|---|---|---|---|---|---|---|---|---|---|---|---|---|---|---|---|---|
| | C | Si | Mn | Ti | AL | B | N | P | S | Cu | Ni | Cr | Mo | V | Nb | Sn | Fe |
| Example 1 | 0.05 | 0.01 | 0.15 | 0.001 | 0.096 | 0.0003 | 0.0075 | 0.019 | 0.001 | 0.24 | 0.09 | 0.19 | 0.02 | 0.000 | 0.000 | 0.012 | Remainder |
| Example 2 | 0.04 | 0.01 | 0.16 | 0.001 | 0.086 | 0 | 0.0078 | 0.018 | 0.001 | 0.24 | 0.09 | 0.13 | 0.03 | 0.000 | 0.000 | 0.011 | Remainder |
| Example 3 | 0.05 | 0.02 | 0.96 | 0.002 | 0.087 | 0 | 0.0096 | 0.019 | 0.003 | 0.30 | 0.13 | 0.15 | 0.03 | 0.003 | 0.002 | 0.014 | Remainder |
| Example 4 | 0.06 | 0.02 | 0.97 | 0.002 | 0.096 | 0 | 0.0075 | 0.015 | 0.002 | 0.30 | 0.12 | 0.13 | 0.03 | 0.004 | 0.002 | 0.014 | Remainder |
| Example 5 | 0.06 | 0.02 | 0.93 | 0.001 | 0.081 | 0 | 0.0081 | 0.017 | 0.002 | 0.27 | 0.11 | 0.15 | 0.03 | 0.003 | 0.002 | 0.014 | Remainder |
| Example 6 | 0.06 | 0.02 | 0.94 | 0.002 | 0.107 | 0 | 0.0078 | 0.016 | 0.001 | 0.28 | 0.13 | 0.15 | 0.03 | 0.003 | 0.002 | 0.013 | Remainder |
| Example 7 | 0.06 | 0.02 | 0.93 | 0.001 | 0.082 | 0 | 0.0086 | 0.015 | 0.002 | 0.26 | 0.13 | 0.16 | 0.04 | 0.002 | 0.001 | 0.012 | Remainder |
| Example 8 | 0.07 | 0.02 | 0.88 | 0.002 | 0.090 | 0 | 0.0073 | 0.022 | 0.002 | 0.33 | 0.10 | 0.15 | 0.02 | 0.002 | 0.001 | 0.015 | Remainder |
| Example 9 | 0.04 | 0.01 | 0.18 | 0.001 | 0.077 | 0 | 0.0096 | 0.012 | 0.001 | 0.28 | 0.11 | 0.09 | 0.04 | 0.001 | 0.001 | 0.018 | Remainder |
| Example 10 | 0.08 | 0.01 | 0.86 | 0.001 | 0.089 | 0 | 0.0069 | 0.022 | 0.001 | 0.33 | 0.10 | 0.15 | 0.02 | 0.003 | 0.002 | 0.013 | Remainder |
| Comparative Example 1 | 0.02 | 0.01 | 0.17 | 0.001 | 0.063 | 0 | 0.0035 | 0.016 | 0.001 | 0.23 | 0.08 | 0.13 | 0.02 | 0.001 | 0.001 | 0.011 | Remainder |
| Comparative Example 2 | 0.02 | 0.02 | 0.16 | 0.001 | 0.084 | 0 | 0.0035 | 0.015 | 0.001 | 0.22 | 0.08 | 0.15 | 0.02 | 0.000 | 0.001 | 0.010 | Remainder |
| Comparative Example 3 | 0.02 | 0.02 | 0.19 | 0.001 | 0.029 | 0 | 0.0038 | 0.015 | 0.002 | 0.23 | 0.08 | 0.13 | 0.03 | 0.001 | 0.002 | 0.012 | Remainder |
| Comparative Example 4 | 0.04 | 0.01 | 0.18 | 0.001 | 0.026 | 0 | 0.0090 | 0.019 | 0.003 | 0.23 | 0.10 | 0.15 | 0.03 | 0.000 | 0.000 | 0.011 | Remainder |
| Comparative Example 5 | 0.05 | 0.01 | 0.16 | 0.001 | 0.045 | 0 | 0.0089 | 0.016 | 0.004 | 0.26 | 0.09 | 0.12 | 0.02 | 0.000 | 0.000 | 0.013 | Remainder |
| Comparative Example 6 | 0.06 | 0.01 | 0.14 | 0.001 | 0.033 | 0 | 0.0085 | 0.017 | 0.003 | 0.27 | 0.10 | 0.13 | 0.03 | 0.001 | 0.001 | 0.012 | Remainder |
| Comparative Example 7 | 0.07 | 0.02 | 0.91 | 0.002 | 0.060 | 0 | 0.0086 | 0.015 | 0.002 | 0.26 | 0.11 | 0.15 | 0.04 | 0.003 | 0.002 | 0.018 | Remainder |
| Comparative Example 8 | 0.06 | 0.02 | 0.85 | 0.001 | 0.064 | 0 | 0.0072 | 0.017 | 0.002 | 0.30 | 0.11 | 0.13 | 0.02 | 0.004 | 0.002 | 0.014 | Remainder |
| Comparative Example 9 | 0.07 | 0.02 | 0.80 | 0.002 | 0.045 | 0 | 0.0075 | 0.017 | 0.004 | 0.25 | 0.10 | 0.15 | 0.03 | 0.003 | 0.002 | 0.014 | Remainder |
| Comparative Example 10 | 0.06 | 0.01 | 0.76 | 0.001 | 0.037 | 0 | 0.0090 | 0.016 | 0.006 | 0.25 | 0.11 | 0.13 | 0.04 | 0.003 | 0.002 | 0.013 | Remainder |

The Al content of each of the hot rolled steel sheets of Examples 1 to 10 and Comparative Examples 1 to 10 was measured by the Iron and Steel - Spark Discharge Emission Spectroscopy Method according to JIS G 1253.

The total nitrogen content of each of the hot rolled steel sheets of Examples 1 to 10 and Comparative Examples 1 to 10 was measured according to JIS G 1228-3 Iron and steel - Methods for determination of nitrogen content - Part 3: Thermal conductimetric method after fusion in a current of inert gas.

Furthermore, the nitrides precipitated in the hot rolled steel sheets were subjected to 10 mass% AA electrolytic extraction (constant current of 20 A/cm²), collected with a filter (0.2 µm mesh), decomposed with (H₂SO₄ + K₂SO₄), and were distilled with 50 mass% NaOH steam. The amount of nitrogen fixed as the nitrides through the above treatment was measured by bispyrazolone spectrophotometric method.

The amount of solid-solved nitrogen was calculated as the difference between the total amount of nitrogen contained and the amount of nitrogen fixed as nitrides.

A JIS No. 5 tensile test specimens were prepared from the above steel sheets, and the aging indexes (AI) of the specimens were measured.

Each of the aging indexes was determined by applying a 7.5% pre-strain to the tensile test specimens, then accelerating the aging process by heating them at 100°C for 3600 seconds, followed by a tensile test. The difference between the lower yield load after aging acceleration and the maximum load when pre-strain application was applied was divided by the cross-sectional area of the parallel section of each of the specimens before pre-straining.

The measurement results are shown in Table 2.

**[Table 2]**

| | Steel Type | Sheet thickness | Total amount of AL in steel sheet | Total amount of N in steel sheet | Amount of precipitated N in steel sheet | Amount of solid-solved N in steel sheet | N fixation Rate | Aging index | Dissolution temperature of AlN |
|---|---|---|---|---|---|---|---|---|---|
| | | (mm) | (mass%) | (mass%) | (mass%) | (mass%) | (%) | (MPa) | (°C) |
| Example 1 | SPHC | 2.30 | 0.096 | 0.0075 | 0.0062 | 0.0013 | 82.67% | 33. 1 | 1,180 |
| Example 2 | SPHC | 2.30 | 0.086 | 0.0078 | 0.0062 | 0.0016 | 79.49% | 32. 0 | 1,171 |
| Example 3 | SS400 | 16.0 | 0.087 | 0.0096 | 0.0091 | 0. 0005 | 94.79% | 1.3 | 1,198 |
| Example 4 | SS400 | 16.0 | 0.096 | 0.0075 | 0.0074 | 0. 0001 | 98.67% | 0 | 1,180 |
| Example 5 | SS400 | 16.0 | 0.081 | 0.0081 | 0.0067 | 0.0014 | 82.72% | 1.0 | 1,169 |
| Example 6 | SS400 | 16.0 | 0.107 | 0.0078 | 0.0073 | 0.0005 | 93.59% | -2.2 | 1,198 |
| Example 7 | SS400 | 16.0 | 0.082 | 0.0086 | 0.0066 | 0.0020 | 76.74% | -0.6 | 1,177 |
| Example 8 | SPHT3 | 1.50 | 0. 090 | 0.0073 | 0.0073 | 0.0000 | 100.00% | -1. 0 | 1,168 |
| Example 9 | SPHC | 2.20 | 0.077 | 0.0096 | 0.0084 | 0.0012 | 87.50% | 1.9 | 1,183 |
| Example 10 | SPHT3 | 2.10 | 0.089 | 0.0069 | 0.0055 | 0.0014 | 79.71% | 4.8 | 1,161 |
| Comparative Example 1 | SPHC | 2.30 | 0.063 | 0.0035 | 0.0014 | 0.0021 | 40.00% | 43.8 | 1,047 |
| Comparative Example 2 | SPHC | 2.30 | 0.084 | 0.0035 | 0.0012 | 0.0023 | 34.29% | 40.6 | 1,076 |
| Comparative Example 3 | SPHC | 2.30 | 0.029 | 0.0038 | 0.0008 | 0.0030 | 21.05% | 46.5 | 978 |
| Comparative Example 4 | SPHC | 2.30 | 0.026 | 0.0090 | 0.0020 | 0.0070 | 22.22% | 56.5 | 1,053 |
| Comparative Example 5 | SPHC | 2.30 | 0.045 | 0.0089 | 0.0014 | 0.0075 | 15.73% | 56.7 | 1,112 |
| Comparative Example 6 | SPHC | 2.30 | 0.033 | 0.0085 | 0.0023 | 0.0062 | 27.06% | 55.6 | 1,070 |
| Comparative Example 7 | SS400 | 16.0 | 0.060 | 0.0086 | 0.0060 | 0.0026 | 69.77% | 10.8 | 1,140 |
| Comparative Example 8 | SPHT3 | 2.00 | 0.064 | 0.0072 | 0.0023 | 0.0049 | 31.94% | 46.7 | 1,127 |
| Comparative Example 9 | SPHT3 | 2.10 | 0.045 | 0.0075 | 0.0007 | 0.0068 | 9.33% | 36.0 | 1,093 |
| Comparative Example 10 | SPHT3 | 4.15 | 0.037 | 0.0090 | 0.0008 | 0.0082 | 8.89% | 58.6 | 1,092 |

From the result in Table 2, it can be seen that the hot rolled steel sheet of the present invention has a low aging index and excellent aging resistance.

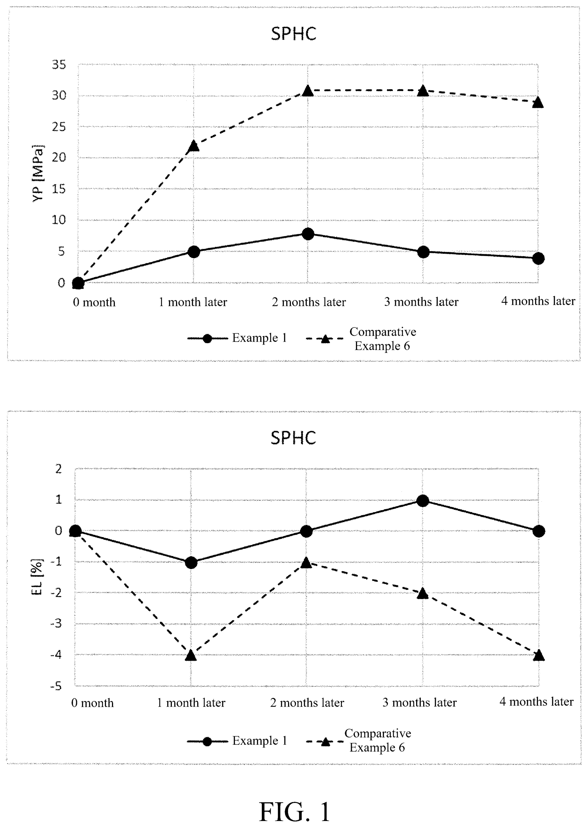

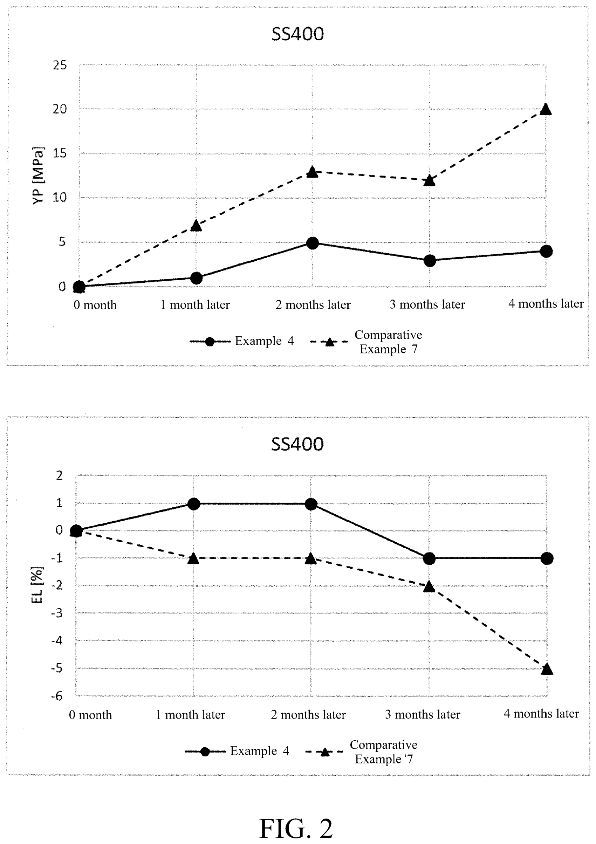

Figs. 1 and 2 show the results of the real-time aging tests for Example 1 and Comparative Example 6 (SPHC), and Example 4 and Comparative Example 7 (SS400). Compared to the comparative examples, the examples showed a smaller increase in yield point and a smaller decrease in elongation. This confirms that the hot rolled steel sheet of the present invention exhibits excellent aging resistance even in real-time tests.

### < Particle Analysis >

Particle analysis was performed according to the following steps.
- A backscattered electron image is acquired with the contrast adjusted so that the metallic parts appear white and the non-metallic parts appear black.
- By irradiating each non-metallic part of the backscattered electron image acquired as the above with an electron beam and analyzing the resulting X-rays, compositional information of the non-metallic parts is obtained.
- The data obtained from the above on non-metallic parts was examined, and the locations where Al and N were detected simultaneously, and the locations where Al and O were detected simultaneously, were counted, respectively.

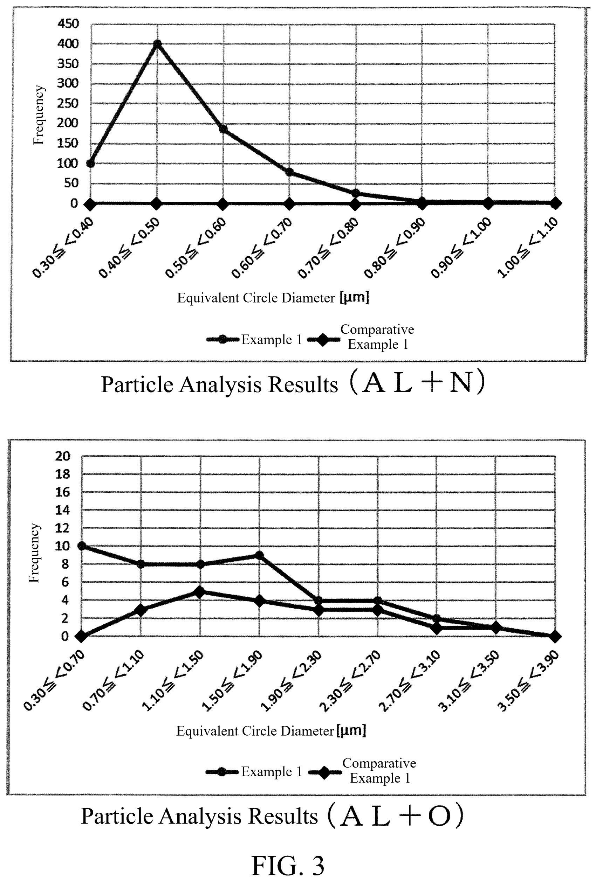

The results are shown in FIG. 3.

Equipment used: Electron Microscope manufactured by JEOL Ltd. JSM-7100F and Energy Dispersive X-ray Spectrometer manufactured by Oxford Instruments (AZtec Energy)
Observation conditions: Measurement magnification 1000x, WD 10mm, total measurement area 1mm², accelerating voltage 15kV

As illustrated in FIG. 3, in the examples with high levels of both Al and N, numerous (Al + N) particles were detected, with an equivalent circle diameter of 1 µm or less. In the Comparative Examples, no AlN was detected.

### < Mechanical properties / workability >

Tensile test specimens (JIS No. 5 specimens for SPHC and SPHT3 steel grades, and JIS No. 1A specimens for SS400 steel grade) were taken from the hot rolled steel sheets of Examples 1 to 10 and Comparative Examples 1 to 10, and tensile tests (yield point, tensile strength, elongation) were performed. In addition, hole expansion tests and Erichsen tests were performed on the hot-rolled steel sheets, excluding the 16 mm thick sheet, to evaluate workability. The evaluation results are shown in Table 3.

**[Table 3]**

| | Steel Type | Sheet thickness | YP | TS | EL | LDH | HEL |
|---|---|---|---|---|---|---|---|
| | | (mm) | (MPa) | (MPa) | (%) | (mm) | (%) |
| Example 1 | SPHC | 2.30 | 266 | 381 | 43 | 16.0 | 130 |
| Example 2 | SPHC | 2.30 | 265 | 378 | 45 | 15.9 | 127 |
| Example 3 | SS400 | 16.0 | 300 | 418 | 33 | - | - |
| Example 4 | SS400 | 16.0 | 297 | 416 | 33 | - | - |
| lixample 5 | SS400 | 16.0 | 306 | 422 | 33 | - | - |
| Example 6 | SS400 | 16.0 | 295 | 416 | 35 | - | - |
| Example 7 | SS400 | 16.0 | 306 | 424 | 27 | - | - |
| Example 8 | SPHT3 | 1.50 | 338 | 449 | 36 | 12.1 | 97 |
| Example 9 | SPHC | 2.20 | 242 | 372 | 45 | - | - |
| Example 10 | SPHT3 | 2.10 | 357 | 470 | 35 | - | - |
| Comparative Example 1 | SPHC | 2.30 | 267 | 357 | 45 | 16.3 | 183 |
| Comparative Example 2 | SPHC | 2.30 | 251 | 357 | 49 | 16.2 | 173 |
| Comparative Example 3 | SPHC | 2.30 | 249 | 357 | 45 | 16.0 | 170 |
| Comparative Example 4 | SPHC | 2.30 | 297 | 392 | 41 | 15.7 | 116 |
| Comparative Example 5 | SPHC | 2.30 | 305 | 404 | 41 | 15.5 | 102 |
| Comparative Example 6 | SPHC | 2.30 | 301 | 409 | 42 | 15.5 | 109 |
| Comparative Example 7 | SS400 | 16.0 | 315 | 431 | 32 | - | - |
| Comparative Example 8 | SPHT3 | 2.00 | 343 | 441 | 38 | - | - |
| Comparative Example 9 | SPHT3 | 2.10 | 358 | 468 | 37 | - | - |
| Comparative Example 10 | SPHT3 | 4.15 | 353 | 444 | 42 | - | - |

Despite the addition of Al, the hot rolled steel sheet of the present invention did not show any decrease in strength or workability.

### < Planar Fatigue Bending >

To evaluate the effect of Al addition on fatigue properties, a planar fatigue bending test was conducted on SPHC material. The results are shown in Table 4.

**[Table 4]**

| | Sheet thickness [mm] | Fatigue limit [MPa] | TS [MPa] | Fatigue limit ratio |
|---|---|---|---|---|
| Example 1 | 2.3 | 210 | 389 | 0.54 |
| Comparative Example 5 | 2.3 | 215 | 415 | 0.52 |

The fatigue limit ratios of Example 1 and Comparative Example 5 were similar, and no effect of Al addition on fatigue properties was observed.

The metallographic structures of all the examples and comparative examples were ferrite + pearlite structures, and the grain size numbers according to the JIS G0551 comparative method ranged from 9.6 to 10.4.

## Claims

1. A hot rolled steel sheet comprising
more than or equal to 0.005% by mass and less than or equal to 0.20% by mass of carbon (C),
more than or equal to 0.004% by mass and less than or equal to 0.55% by mass of silicon (Si),
more than or equal to 0.07% by mass and less than or equal to 1.65% by mass of manganese (Mn),
less than or equal to 0.005% by mass of titanium (Ti),
less than or equal to 0.0005% by mass of boron (B), and
a remainder including iron (Fe), nitrogen (N), aluminum (Al), and unavoidable impurities,
wherein
more than or equal to 0.0065% by mass and less than or equal to 0.0120% by mass of the nitrogen (N) is contained,
more than 0.070% by mass and less than or equal to 0.110% by mass of the aluminum (Al) is contained, and
less than or equal to 0.0020% by mass of solid-solved nitrogen that is not combined with other components is contained.

2. The hot rolled steel sheet according to claim 1,
wherein
the steel sheet contains more than or equal to (0.000562 / (an amount of the nitrogen (N))) (% by mass) of the aluminum.

3. The hot rolled steel sheet according to claim 1,
wherein
more than or equal to 80% by mass of the nitrogen (N) is in a form of aluminum nitride (AlN).
